(19) Europäisches Patentamt
European Patent Office
Office européen des brevets

(11) **EP 4 353 394 A1**

(12) **EUROPEAN PATENT APPLICATION**
published in accordance with Art. 153(4) EPC

(43) Date of publication:
**17.04.2024 Bulletin 2024/16**

(21) Application number: **22849325.0**

(22) Date of filing: **19.07.2022**

(51) International Patent Classification (IPC):
**B23K 11/24** (2006.01)   **B23K 11/11** (2006.01)
**B23K 11/16** (2006.01)

(52) Cooperative Patent Classification (CPC):
**B23K 11/11; B23K 11/16; B23K 11/24**

(86) International application number:
**PCT/JP2022/028107**

(87) International publication number:
**WO 2023/008263 (02.02.2023 Gazette 2023/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.07.2021 JP 2021125022**

(71) Applicant: **JFE Steel Corporation**
**Tokyo 100-0011 (JP)**

(72) Inventors:
• **KAWABE, Nao**
**Tokyo 100-0011 (JP)**
• **SAWANISHI, Chikaumi**
**Tokyo 100-0011 (JP)**
• **TAKASHIMA, Katsutoshi**
**Tokyo 100-0011 (JP)**
• **TANIGUCHI, Koichi**
**Tokyo 100-0011 (JP)**
• **MATSUDA, Hiroshi**
**Tokyo 100-0011 (JP)**
• **YAMAGISHI, Daiki**
**Tokyo 100-0011 (JP)**

(74) Representative: **Haseltine Lake Kempner LLP**
**Bürkleinstrasse 10**
**80538 München (DE)**

(54) **RESISTANCE SPOT WELDING METHOD**

(57) It is an object to provide a resistance spot welding method. In the resistance spot welding method of the invention, a high strength zinc-based coated steel sheet used in a sheet set has an equivalent carbon content of 0.20% or more and a tensile strength of 780 MPa or more. In a first energization step, a current value at the start of the energization is denoted as Is, and a current value at the end of the energization is denoted as If. The thickness of the thinnest steel sheet among steel sheets overlapping each other is denoted as t. Then energization is performed such that the current value If at the end of the energization satisfies the relation If > Is to thereby form a weld having a nugget diameter of from $3.0\sqrt{t}$ mm to $4.5\sqrt{t}$ mm inclusive. In a second energization step, a cooling step of holding a non-energization state for 10 ms or longer and shorter than 160 ms and an energization step of performing energization at a current value Ip equal to or more than the current value If at the end of the energization for 20 ms or longer and shorter than 200 ms are repeated.

FIG. 1

**Description**

Technical Field

The present invention relates to a resistance spot welding method.

Background Art

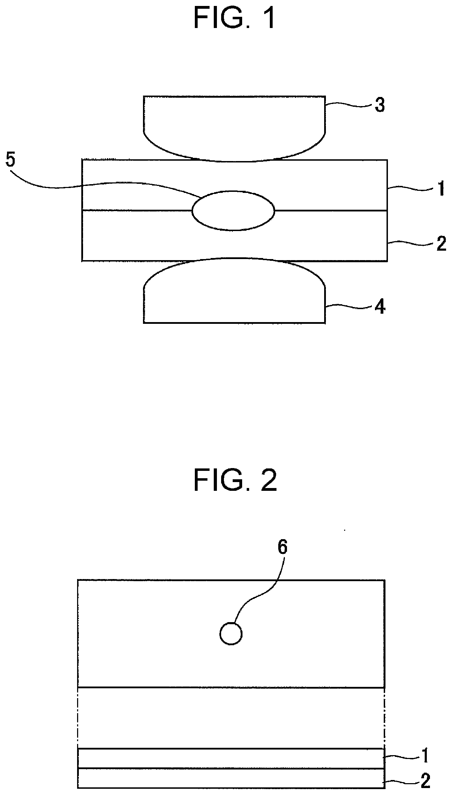

Generally, to join two or more overlapping steel sheets together, a resistance spot welding method, which is one type of lap resistance welding method, is used. As shown in Fig. 1, in this welding method, two steel sheets 1 and 2 are disposed so as to overlap each other to obtain a sheet set, and the upper and lower sides of the sheet set are held between a pair of electrodes 3 and 4. A welding current is applied between the pair of upper and lower electrodes 3 and 4 to join the steel sheets together while the sheet set is pressed from the upper and lower sides using the pair of electrodes. The resistance heat generated by the welding current applied is used to obtain a point-like weld 5. The point-like weld 5 is referred to as a nugget. The nugget is a portion formed when the overlapping steel sheets 1 and 2 are melted at their contact portions due to the welding current applied to the steel sheets and then solidified, and the steel sheets are thereby joined together in a point-like shape. In Fig. 1, the two overlapping steel sheets are shown as an example.

However, one problem with the resistance spot welding of a sheet set prepared by disposing a plurality of steel sheet including a surface-treated steel sheet so as to overlap each other is that cracking may occur in the weld. The surface-treated steel sheet is a steel sheet having a metal coated layer on the surface of a base material (base steel sheet). Examples of the metal coating include: zinc coatings typified by electrogalvanized coatings and hot-dip galvanized coatings (including hot-dip galvannealed coatings); and zinc alloy coatings containing, in addition to zinc, another element such as aluminum or magnesium. The melting points of the zinc coatings and the zinc alloy coatings are lower than the melting point of the base material, and therefore the following problem occurs.

It has been considered that the cracking in the weld is caused by so-called liquid metal embrittlement. Specifically, the low-melting point metal coated layer on the surface of the steel sheet melts during welding. When the welding pressure from the electrodes and tensile stress due to thermal expansion and contraction of the steel sheets are applied to the weld, the molten low-melting point metal penetrates into grain boundaries of the base material of the surface-treated steel sheet and causes a reduction in grain boundary strength, and the cracking thereby occurs.

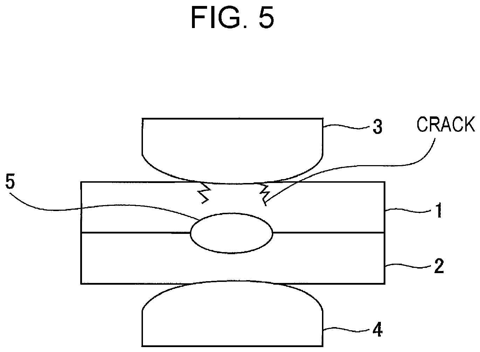

The above cracking is likely to occur when large deformation occurs in the weld. For example, when welding is performed under the conditions under which splashes are generated, cracking is likely to occur on the surfaces of the steel sheets 1 and 2 that are in contact with the electrodes 3 and 4 as shown in Fig. 5. From the viewpoint of ensuring joint strength, it is important to form a nugget having a large nugget diameter. In actual operations, a sufficient current density cannot be ensured in a region to be welded in some cases due to the influences of a diverted flow to a welding point present near the region to be welded and of work disturbances such as wear of the electrodes due to continuous welding point. In such cases, the amount of heat input decreases, and it is difficult to ensure the prescribed nugget diameter. When the current value during welding is set high with consideration given to the case in which the amount of heat input decreases, a nugget having a large nugget diameter can be formed. However, in this case, large deformation of the weld typified by the occurrence of splashes occurs, and the risk of cracking increases. As described above, in actual operations, it is difficult to stably obtain a nugget having a large nugget diameter while the occurrence of cracking during welding is reduced, and this is one practical problem with the surface-treated steel sheets.

For example, Patent Literature 1 to Patent Literature 4 propose techniques for addressing the foregoing problem. Patent Literature 1 proposes a method for spot-welding high strength coated steel sheets. In this method, the welding energization time and the holding time after the welding energization are appropriately controlled to reduce the occurrence of cracking.

In Patent Literature 2, energization is performed using an energization pattern including three or more stages. The welding conditions such as the energization time and the welding current are controlled such that an appropriate current range (a current range that allows a nugget having a desired diameter and an unmelted thickness of 0.05 mm or more to be formed stably) is 1.0 kA or more and preferably 2.0 kA or more, and a cooling time is provided between the stages. With this proposed method, the occurrence of cracking can be reduced.

Patent Literature 3 proposes a method in which the holding time after energization is adjusted appropriately to reduce the occurrence of cracking.

Patent Literature 4 proposes a method in which, after primary energization is performed to form a nugget, secondary energization that does not allow the nugget to grow is performed for a short time to thereby improve the cross tension strength of the joint.

Citation List

Patent Literature

> PTL 1: Japanese Unexamined Patent Application Publication No. 2003-103377
> PTL 2: Japanese Unexamined Patent Application Publication No. 2003-236676
> PTL 3: Japanese Unexamined Patent Application Publication No. 2017-47476
> PTL 4: Japanese Unexamined Patent Application Publication No. 2012-187639

Summary of Invention

Technical Problem

However, in Patent Literature 1 and Patent Literature 2, no studies have been conducted on the influence of work disturbances. In consideration of the actual operations in assembly of automobiles, these measures are insufficient in some cases.

Patent Literature 3 is the technique that can reduce cracking that occurs in a period of time from the start of energization to the time at which the electrodes are released. However, no description is given of cracking that occurs during energization, and it is difficult to reduce such cracking in some cases.

In Patent Literature 4, no description is given of cracking during welding. Under the conditions under which a large nugget diameter is formed in the primary energization, the deformation of the surfaces of the steel sheets is large, and cracking occurs in some cases.

The above problem, i.e., the fact that it is difficult to form a nugget having a large nugget diameter stably while the occurrence of cracking in the surface-treated steel sheet is reduced during welding, is present not only when steel sheets for automobiles are resistance-spot-welded but also when other steel sheets are resistance-spot-welded.

The present invention has been made in view of the foregoing circumstances, and it is an object to provide a resistance spot welding method with which a nugget having a large nugget diameter can be formed stably while the occurrence of cracking of the surface-treated steel sheet during welding is reduced.

Solution to Problem

The present inventors have conducted extensive studied to achieve the above object.

The cracking during welding is likely to occur when the weld is largely deformed. Therefore, if the nugget can be increased in size while its deformation is reduced as much as possible, the occurrence of cracking during welding can be reduced. In this case, a nugget having a large nugget diameter can be formed stably. One cause of the deformation of the weld is the occurrence of splashes. It has been found that reducing the occurrence of large splashes (i.e., splashes containing a large amount of liquid metals) is effective in reducing the occurrence of cracking during welding.

An energization step for welding is divided into two steps including a first energization step and a second energization step. In the first energization step, the energization is performed such that no extreme deformation occurs to thereby form a nugget having a certain nugget diameter. In this case, since the current value is adjusted in order to reduce the deformation, a sufficiently large nugget is not formed. A problem that can occur in this case is that, when, for example, disturbances that cause the nugget diameter to decrease are present, a nugget having the prescribed nugget diameter cannot be formed. Therefore, in the second energization step, the nugget is increased in size while the energization conditions are controlled such that the weld is not largely deformed. In this manner, while the occurrence of cracking during welding is reduced, the nugget formed can stably have a large nugget diameter.

The energization conditions in the first energization step and the second energization step are shown below.

In the first energization step, it is important to form a weld such that large deformation does not occur in the subsequent second energization step. In this step, an energization pattern is controlled to control the heat input to thereby bond a pressure bonding portion (a corona bond portion) around the nugget firmly. In this manner, the amount of splashes (the amount of molten metal splashes) in the subsequent second energization step can be reduced. Therefore, the deformation of the weld is small, and the occurrence of cracking can be reduced.

In the second energization step, the energization is performed using a current value larger than the current value in the first energization step to thereby increase the size of the nugget. However, if the energization is performed for a long time, the heat input is excessively large, and the weld is largely deformed. Accordingly, an energization pattern in which short-term energization and short-term cooling are repeated is used. In this case, the nugget is increased in size in a stepwise manner, and the deformation of the nugget can be reduced, so that the occurrence of cracking during welding can be reduced. With this energization pattern, even when splashes are generated, the short-term energization can reduce the amount of the splashes (the amount of molten metal splashes). Therefore, the deformation of the weld is small, and the occurrent of cracking during welding can be reduced.

The present invention has been made based on the above findings and summarized as follows.

[1] A resistance spot welding method including: disposing two or more steel sheets including at least one high strength zinc-based coated steel sheet so as to overlap each other to thereby form a sheet set; holding the sheet set between a pair of welding electrodes; and energizing the steel sheets under application of pressure to join the steel sheets together,

wherein the high strength zinc-based coated steel sheet has an equivalent carbon content represented by formula (1) of 0.20% or more and a tensile strength of 780 MPa or more,
wherein the energizing includes a first energization step and a second energization step,
wherein, in the first energization step, a current value at a start of energization is denoted as $I_s$ (kA), a current value at an end of the energization is denoted as $I_f$ (kA), the thickness of a thinnest steel sheet among the overlapping steel sheets is denoted as $t$ (mm), and
the energization is performed such that the current value $I_f$ (kA) at the end of the energization satisfies formula (2) to thereby form a weld having a nugget diameter of from $3.0\sqrt{t}$ (mm) to $4.5\sqrt{t}$ (mm) inclusive, and
wherein, in the second energization step, a cooling step of holding a non-energization state for 10 ms or longer and shorter than 160 ms and an energization step of energizing the steel sheets at a current value $I_p$ (kA) equal to or larger than the current value $I_f$ (kA) at the end of the energization for 20 ms or longer and shorter than 200 ms are repeated to increase a size of a nugget,

$$Ceq = C + Si / 30 + Mn / 20 + 2P + 4S, \qquad (1)$$

$$If > Is, \qquad (2)$$

where element symbols in formula (1) represent the contents (% by mass) of respective elements, and the content of an element is 0 when the element is not contained.

[2] The resistance spot welding method according to [1], wherein the first energization step is multistage energization including first to n-th stages (n is an integer of 2 or more), and

wherein current values in the respective stages in the multistage energization are denoted as $I_1$ to $I_n$ (kA), the current value $I_1$ (kA) in the first stage is the same as the current value $I_s$ (kA) at the start of the energization, the current value $I_n$ in the n-th stage is the same as the current value $I_f$ (kA) at the end of the energization, and the current values $I_1$ to $I_n$ (kA) in the respective stages satisfy formula (3),

$$I1 < I2 < I3 < \cdots < In. \qquad (3)$$

[3] The resistance spot welding method according to [1], wherein the energization in the first energization step is upslope energization in which the current value is continuously increased from the current value $I_s$ at the start of the energization to the current value $I_f$ at the end of the energization.
[4] The resistance spot welding method according to any one of [1] to [3], wherein the number of repetitions of the cooling step and the energization step in the second energization step is 2 or more.
[5] The resistance spot welding method according to any one of [1] to [4], wherein the diameter of the formed nugget at completion of the first energization step is denoted as $N_1$ (mm), the diameter of the formed nugget at completion of the first energization step and the second energization step is denoted as $N_2$ (mm), and
the amount of increase in the diameter of the nugget in the second energization step is $0.1\sqrt{t}$ (mm) or more, the amount of increase being represented by ($N_2 - N_1$). Advantageous Effects of Invention

According to the present invention, a nugget having a large diameter can be stably formed while the occurrence of cracking of the surface-treated steel sheet during welding can be reduced, so that industrially significant effects are obtained.

Brief Description of Drawings

[Fig. 1] Fig. 1 is a cross-sectional view schematically showing an example of resistance spot welding in the invention.
[Fig. 2] Fig. 2 is an illustration of a test specimen for the resistance spot welding in Examples of the invention, the upper part showing a plan view, and the lower part showing a side view.
[Fig. 3] Fig. 3 is an illustration of a test specimen for the resistance spot welding in the Examples in the invention, the upper part showing a plan view, and the lower part showing a side view.
[Fig. 4] Fig. 4 is an illustration of a test specimen for the resistance spot welding in the Examples in the invention, the upper part showing a plan view, and the lower part showing a side view.
[Fig. 5] Fig. 5 is a cross-sectional view schematically showing an example of the occurrence of cracks during conventional resistance spot welding.

Description of Embodiments

Referring to the drawings, the resistance spot welding method of the invention will be described. However, the invention is not limited to the following embodiments.

The invention is a resistance spot welding method including: disposing two or more steel sheets so as to overlap each other to thereby form a sheet set; holding the sheet set between a pair of welding electrodes disposed in an upper-lower direction relative to the sheet set; and energizing the steel sheets in an energization pattern described later under the application of pressure to form a nugget and join the steel sheets together.

For example, when a sheet set including two overlapping steel sheets is resistance-spot-welded as shown in Fig. 1, the pair of welding electrodes, i.e., a welding electrode 4 disposed on the lower side of the sheet set (this electrode may be hereinafter referred to also as a "lower electrode") and a welding electrode 3 disposed on the upper side of the sheet set (this electrode may be hereinafter referred to also as an "upper electrode"), are used to hold therebetween the overlapping steel sheets (a lower steel sheet 2 and an upper steel sheet 1), and the overlapping steel sheets are energized under the application of pressure. The number of overlapping steel sheets is preferably 4 or less.

No particular limitation is imposed on the structure of an apparatus used to perform the resistance spot welding method of the invention, so long as the apparatus has a structure in which lower and upper electrodes are used for pressurization and the welding pressure during the pressurization is controlled. For example, a device such as an air cylinder or a servo motor can be used. No particular limitation is imposed on the structure used to supply a current during energization and control the current value. The current used in the invention may be a DC current or an AC current. When an AC current is used, the "current value" means an "effective current."

No particular limitation is imposed on the tip type of the upper and lower electrodes. Examples of the tip type include a DR type (dome radius type), an R type (radius type), and a D type (dome type) specified in JIS C9304: 1999. The tip diameter of each electrode is, for example, 4 mm to 16 mm. The radius of curvature of the tip of each electrode is, for example, 10 mm to 400 mm. Flat electrodes having flat tip ends may also be used.

As described above, the overlapping steel sheets (sheet set) are held between the pair of welding electrodes and energized under the application of pressure. A nugget having the required size is thereby formed by resistance heating, and the overlapping steel sheets are joined together, so that a welded joint is obtained. In the present invention, the energization is performed in a specific pattern described later.

The present invention is applied to a sheet set in which both sides of the sheet set to be in contact with the welding electrodes disposed on the upper and lower sides of the sheet set or one side thereof is a surface-treated steel sheet having a metal coated layer. The "both sides of the sheet set to be in contact with the welding electrodes" are two outermost steel sheets that are included in the sheet set including the plurality of steel sheets and are to be in contact with the upper and lower electrodes. The "one side of the sheet set to be in contact with the welding electrodes" is one of the two outermost steel sheets that is included in the sheet set including the plurality of steel sheets and is to be in contact with the upper or lower electrode. Preferably, the melting point of the metal coated layer used is lower than the melting point of the base material of the surface-treated steel sheet.

As described above, the surface-treated steel sheet is a steel sheet having a metal coated layer on the surface of the base material (base steel sheet). Examples of the metal coated layer include: zinc coatings typified by electrogalvanized coatings and hot-dip galvanized coatings (including hot-dip galvannealed coatings); and zinc alloy coatings containing, in addition to zinc, another element such as aluminum or magnesium. In the present embodiment, the above-described surface-treated steel sheet is referred to as a "zinc-based coated steel sheet." Therefore, in the present invention, at least one of the plurality of steel sheets included in the sheet set is a zinc-based coated steel sheet.

The above-described zinc-based coated steel sheet is a high strength steel sheet (high strength zinc-based coated steel sheet) having an equivalent carbon content (Ceq)(%) represented by formula (1) below of 0.20% or more and a tensile strength of 780 MPa or more.

$$\text{Ceq (\%) = C + Si / 30 + Mn / 20 + 2P + 4S} \qquad (1)$$

Here, each element symbol in formula (1) represents the content (% by mass) of the element, and the content is 0 when the element is not contained.

The high strength steel sheet is highly sensitive to cracking, and the occurrence of cracking during welding is likely to be a problem. However, the effects of the invention can be obtained by adjusting the equivalent carbon content to 0.20% or more even when the tensile strength of the steel sheet is 780 MPa or more. A steel sheet having an equivalent carbon content of less than 0.20% is not sensitive to cracking, and the occurrence of cracking during welding is unlikely to be a problem. From the viewpoint of obtaining these effects more effectively, the equivalent carbon content Ceq is preferably 0.25% or more and more preferably 0.30% or more.

The upper limit of the equivalent carbon content (Ceq) is not particularly specified. Even when the energization pattern in the invention is applied to a steel sheet having an extremely high equivalent carbon content, i.e., extremely sensitive to cracking, the effect of preventing cracking may not be obtained sufficiently. Therefore, the equivalent carbon content (Ceq) is preferably 0.60% or less and more preferably 0.50% or less.

The chemical composition of the high strength zinc-based coated steel sheet used in the invention may be appropriately adjusted such that the above-described range of the equivalent carbon content(Ceq) and the above-described tensile strength are obtained.

The tensile strength of the zinc-based coated steel sheet is preferably 780 MPa or more. A steel sheet having a large tensile strength tends to contain large amounts of alloy components. Therefore, the sensitivity to cracking is likely to be high, and the effects of the invention are likely to be obtained. The tensile strength is more preferably 980 MPa or more. The upper limit of the tensile strength of the steel sheet is not particularly specified, but the tensile strength is preferably 2500 MPa or less.

In the present invention, no particular limitation is imposed on the thicknesses of the steel sheets to be resistance-spot-welded. The thicknesses are preferably in the range of, for example, from 0.5 mm to 3.0 mm inclusive. A steel sheet having a thickness in the above range can be preferably used for automobile members.

The two or more steel sheets to be resistance-spot-welded may be steel sheets of the same type and having the same shape or may be steel sheets of different types and having different shapes. A combination of a surface-treated steel sheet having a metal coated layer and a steel sheet having no metal coated layer may be used.

Next, the energization pattern in the resistance spot welding method of the invention will be described.

In the present invention, two or more steel sheets including at least one zinc-based coated steel sheet are disposed so as to overlap each other to thereby form a sheet set, and the sheet set is held between a pair of welding electrodes. The sheet set is energized under the application of pressure to form a nugget and join the steel sheets together. The energization includes a first energization step and a second energization step. In the present invention, the energization is performed in a specific pattern described below.

<First energization step>

First, in the first energization step, the current value at the start of the energization is denoted as Is (kA), and the current value at the end of the energization is denoted as If (kA). The thickness of the thinnest steel sheet among the overlapping steel sheets is denoted as t (mm). The energization is performed such that the current value Is (kA) at the start of the energization and the current value If (kA) at the end of the energization satisfy the relation of formula (2). In this manner, a weld having a nugget diameter of from 3.0√t (mm) to 4.5Vt (mm) inclusive is formed.

$$\text{If > Is} \qquad (2)$$

When the relation between the current value Is at the start and the current value If at the end of the energization is If ≤ Is, the heat input to the pressure welded portion is insufficient. In this case, the pressure welded portion around the nugget cannot be firmly joined in the first energization step, and the effect of reducing the amount of splashes that can be generated in the subsequent second energization step cannot be obtained. Moreover, it is difficult to make the nugget grow sufficiently, and the nugget diameter in the above range may not be obtained. The current value If at the end of the energization is preferably equal to or more than (Is + 1) (kA) and more preferably equal to or more than (Is + 3) (kA).

The upper limit of the current value If at the end of the energization is not particularly specified. However, from the viewpoint of reducing the occurrence of splashes due to a rapid increase in the current in the first energization step, the current value If at the end of the energization is preferably equal to or less than (Is + 10) (kA) and more preferably equal to or less than (Is + 8) (kA).

To form the nugget in the first energization step without generation of splashes and to enhance the effect of reducing the splashes in the second energization step, the current value If at the end of the energization is in the range of preferably 5 to 15 kA.

If the diameter of the nugget formed is less than $3.0\sqrt{t}$ (mm), the diameter of the nugget formed in the first energization step is excessively small, and it is difficult to effectively increase the size of the nugget in the subsequent second energization step. It is therefore difficult to obtain a large nugget diameter. If the diameter of the nugget formed exceeds $4.5\sqrt{t}$ (mm), the heat input during the energization is excessively large. In this case, the weld is deformed, and cracking is likely to occur. Therefore, the diameter of the nugget formed in the first energization step is from $3.0\sqrt{t}$ (mm) to $4.5\text{V}t$ (mm) inclusive.

The diameter of the nugget formed in the first energization step is preferably in the range of $4.0\sqrt{t}$ (mm) to $4.5\text{V}t$ (mm). When the diameter of the nugget is in the range of $4.0\text{-}\sqrt{t}$ (mm) to $4.5\text{V}t$ (mm), the effect of increasing the nugget diameter that is obtained in the subsequent second energization step can be more significant.

The "t" is the thickness of a steel sheet. Specifically, the thickness of the thinnest steel sheet among the overlapping steel sheets forming the sheet set is denoted as t. For example, when the thicknesses of the plurality of steel sheets forming the sheet set differ from each other, the thickness of the thinnest steel sheet is defined as t.

In the present invention, as described above, it is important that the weld be formed in the first energization step such that the weld is not largely deformed in the subsequent second energization step. Therefore, the current during energization in the first energization step is a variable current and controlled so as to satisfy formula (2). Examples of a method for controlling the current such that it is variable include multistage energization and upslope energization. By controlling the variable current such that the current increases, the pressure welded portion around the nugget is firmly joined in the first energization step, and the amount of splashes in the subsequent second energization step can be reduced. Therefore, the deformation of the weld is small, and the occurrence of cracking can be reduced.

Examples of the specific method will next be described.

[Multistage energization]

The energization in the first energization step is multistage energization including n stages (n is an integer of 2 or more). The current values in the respective n stages in the multistage energization are denoted as I1 to In (kA). The current value I1 (kA) in the first stage is the same as the current value Is (kA) at the start of the energization, and the current value In in the n-th stage is the same as the current value If (kA) at the end of the energization. In this case, it is preferable that the current values I1 to In (kA) in the n stages satisfy formula (3) .

$$I1 < I2 < I3 <...< In \qquad (3)$$

In the multistage energization including the n stages, if the current value I1 (kA) in the first stage, the current value I2 (kA) in the second stage, the current value I3 (kA) in the third stage,..., and the current value In (kA) in the n-th stage do not satisfy formula (3), the heat input to the pressure welded portion is insufficient. Therefore, the pressure welded portion around the nugget cannot be firmly joined in the first energization step, and the effect of reducing the amount of splashes, which may be generated in the subsequent second energization step, cannot be obtained. Moreover, the nugget cannot be grown sufficiently, and the nugget diameter in the above-described range may not be obtained.

The "n" indicating the multistage is an integer of 2 or more. From the viewpoint of preventing excessively complicated management of the welding conditions during the welding operation, n is preferably 5 or less.

[Upslope energization]

Preferably, the energization in the first energization step is upslope energization in which the current value is continuously increased from the current value Is at the start of the energization to the current value If at the end of the energization. In this manner, the pressure welded portion around the nugget is firmly joined in the first energization step, and the amount of splashes in the subsequent second energization step can be reduced, so that the deformation of the weld can be reduced. Therefore, the occurrence of cracking can be reduced.

The conditions for the energization time and the welding pressure in the first energization step can be appropriately selected such that the nugget diameter described above can be obtained. In the present invention, from the viewpoint of forming a nugget having the above-described nugget diameter without the occurrence of splashes, it is preferable that the energization time in the resistance spot welding conditions in the first energization step is 100 to 700 ms. If the energization time is 100 ms or shorter, the effect of firmly joining the pressure welded portion around the nugget is unlikely to be obtained. If the energization time is 700 ms or longer, the heat input is excessively large, and the weld can be deformed excessively. When the first energization step is multistage energization, the energization time in this step is controlled such that the sum of the energization times in these stages is within the above range. The energization time is more preferably in the range of 100 to 500 ms.

The welding pressure in the first energization step is preferably in the range of 1.5 kN to 8.0 kN.

<Second energization step>

After the first energization step described above, the second energization step is performed. In the second energization step, a cooling step of holding a non-energization state for 10 ms or longer and 160 ms or shorter and an energization step of energizing the steel sheets at a current value Ip (kA) equal to or larger than the current value If (kA) at the end of the energization in the first energization step for 20 ms or longer and shorter than 200 ms are repeated to thereby increase the size of the nugget.

In the present invention, to ensure sufficient joint strength, it is preferable that the target diameter of the nugget of the weld obtained through the second energization step is in the range of $4.5\sqrt{t}$ (mm) to $6.0\sqrt{t}$ (mm).

[Cooling step]

If the non-energization time in the cooling step is shorter than 10 ms, the effect of cooling the weld is not sufficient, and the weld is likely to be deformed largely in the subsequent energization step. In this case, cracking is likely to occur in the weld. If the non-energization time in the cooling step is longer than 160 ms, the influence of the shrinkage of the nugget during cooling is excessively large. In this case, the effect of increasing the size of the nugget by the energization performed by repeating the cooling step and the energization step is not obtained sufficiently. Therefore, the non-energization time in the cooling step is 10 ms or longer and shorter than 160 ms.

[Energization step]

If the energization time in the energization step is shorter than 20 ms, the heat input is insufficient, so that the effect of increasing the size of the nugget cannot be obtained sufficiently. If the energization time in the energization step is 200 ms or longer, an excessively large heat input is applied in one energization operation. In this case, the weld is likely to be deformed largely, and cracking is likely to occur in the weld. Therefore, the energization time in the energization step is 20 ms or longer and shorter than 200 ms. The energization time in the energization step is preferably 160 ms or shorter and more preferably 150 ms or shorter.

To more effectively obtain the effect of increasing the nugget diameter stably while the deformation of the weld is reduced, it is preferable that the non-energization time in the cooling step in the second energization step is set to 10 to 80 ms and that the energization time in the energization step in the second energization step is set to 20 to 100 ms. More preferably the non-energization time in the cooling step is 60 ms or shorter.

More preferably, the non-energization time in the cooling step is 20 ms or longer. More preferably, the energization time in the energization step is 40 ms or longer.

If the current value Ip (kA) in the energization step is less than the current value If (kA) at the end of the energization in the first energization step, the heat input is insufficient, so that the effect of increasing the size of the nugget cannot be obtained. Therefore, the current value Ip (kA) in the energization step is equal to or larger than the current value If (kA) at the end of the energization in the first energization step. The upper limit of the current value Ip in the energization step is not particularly specified. If the current is excessively large, the heat input is excessively large, and the deformation of the weld is large, so that cracking may occur. Therefore, the current value Ip (kA) is preferably equal to or less than $(4 \times If)$ (kA), more preferably equal to or less than $(3 \times If)$ (kA), and still more preferably equal to or less than $(1.5 \times If)$ (kA).

In the present invention, the number of repetitions of the cooling step and the energization step in the second energization step may be one but is preferably two or more. If the number of repetitions is less than two, the effect of increasing the nugget diameter may not be obtained sufficiently. The upper limit of the number of repetitions is not particularly specified. However, if the number of repetitions exceeds 10, the effect of increasing the size of the nugget is saturated. In this case, the effect obtained is unlikely to be large, and the total time of the entire welding process increases. Therefore, from the viewpoint of operational efficiency, the number of repetitions is preferably 10 or less. The number of repetitions is more preferably 5 or less.

The repeated energization operations in the second energization step are constant energization.

Let the diameter of the nugget formed at the completion of the first energization step be N1 (mm), and the diameter of the nugget formed at the completion of the first energization step and the second energization step be N2 (mm). Then, from the viewpoint of obtaining a nugget having a large diameter in the invention, the value of (N2 - N1) indicating the amount of increase in the nugget diameter in the second energization step is preferably $0.1\sqrt{t}$ (mm) or more. The value of (N2 - N1) is more preferably $0.3\sqrt{t}$ (mm) or more and still more preferably $0.5\sqrt{t}$ (mm) or more. If the amount of increase in the nugget diameter in the second energization step is excessively large, the heat input is excessively large, and the deformation of the weld is large, so that cracking may occur. Therefore, the amount of increase is preferably $3.0\sqrt{t}$ (mm) or less. The value of (N2-N1) is more preferably $2.5\sqrt{t}$ (mm) or less and still more preferably $2.0\sqrt{t}$ (mm) or less.

In the above description, the resistance spot welding of two overlapping steel sheets has been mainly described. However, the present invention can be similarly applicable to welding of three or more overlapping steel sheets, and the same effects as above can be obtained.

EXAMPLES

The operations and effects of the present invention will be described by way of Examples. However, the present invention is not limited to the following Examples.

In the Examples, two steel sheets including a zinc-based coated steel sheet were used and disposed so as to overlap each other to form a sheet set (see Table 1). In the Examples, the upper and lower steel sheets used were each a hot-dip galvannealed (GA) steel sheet or a cold rolled steel sheet. The equivalent carbon content (Ceq) represented by formula (1) above, the tensile strength, and the thickness of each steel sheet are shown in Table 1. Each of the sheet sets was subjected to resistance spot welding under conditions shown in Table 2-1 or 3-1 to produce a welded joint.

Under conditions shown in Table 2-1, the first energization step is "multistage energization." Under conditions shown in Table 3-1, the first energization step is "upslope energization." In the multistage energization in Table 2-1, the "current value I1 (kA) in the first stage" means the "current value Is (kA) at the start of the energization," and the "current value In (kA) in the final stage (n-th stage)" means the "current value If (kA) at the end of the energization." Specifically, when multistage energization with n = 3 is performed, the current value in the third stage, i.e., the final stage, is the current value at the end of the energization.

The resistance spot welding was performed at room temperature, and the welding electrodes (lower and upper electrodes) were water-cooled constantly. The lower and upper electrodes were each a chromium-copper-made DR-type electrode having a tip with a diameter (tip diameter) of 6 mm and a radius of curvature of 40 mm. The upper electrode was driven by a servo motor to control the welding pressure, and a DC power source was supplied during energization.

Three welded joints were produced under the same conditions with three different disturbance conditions, i.e., "with no disturbance," "with a sheet gap," and "with existing welding points." Each of the welded joints obtained was used to observe the nugget diameter and the presence or absence of cracking (LME cracking). Moreover, the amount of increase in the nugget diameter was observed.

Referring to Figs. 2 to 4, production of welded joints with the above-described three different disturbance conditions will be described. Each figure shows a test specimen with resistance spot welding steel sheets overlapping each other. The upper illustration shows a plan view, and the lower illustration shows a side view.

The welded joint in the disturbance condition of "with no disturbance" was produced as follows. As shown in Fig. 2, two steel sheets (an upper steel sheet 1 and a lower steel sheet 2) having a size of 30 mm × 100 mm (short side × long side) and produced from any of the above steel sheets were prepared. The steel sheets were disposed so as to overlap each other to obtain a test specimen, and the center of the test specimen was welded under conditions shown in Table 2-1 or 3-1 to produce a welded joint having a weld 6 at the center. The weld 6 in the obtained welded joint was used to observe the nugget diameter and the presence or absence of cracking. Moreover, the amount of increase in the nugget diameter was observed.

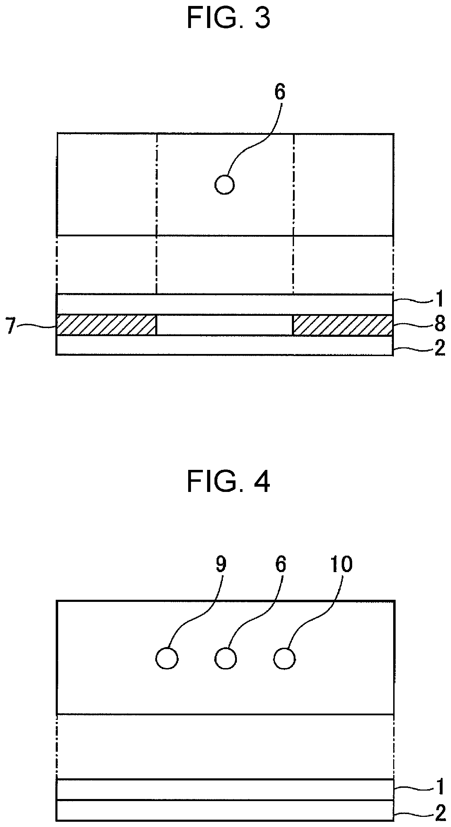

The welded joint in the disturbance condition of "with a sheet gap" was produced as follows. As shown in Fig. 3, two steel sheets (an upper steel sheet 1 and a lower steel sheet 2) having a size of 30 mm × 100 mm (short side × long side) and produced from any of the above steel sheets were prepared. Spacers 7 and 8 having a thickness of 1.6 mm and a size of 30 mm × 25 mm (long side × short side) were placed between the two steel sheets at opposite edge portions to obtain a test specimen. The center of the test specimen was welded under conditions shown in Table 2-1 or 3-1 to produce a welded joint having a weld 6 at the center. The weld 6 in the obtained welded joint was used to observe the nugget diameter and the presence or absence of cracking. Moreover, the amount of increase in the nugget diameter was observed.

The welded joint in the disturbance condition of "with existing welds" was produced as follows. As shown in Fig. 4, two steel sheets (an upper steel sheet 1 and a lower steel sheet 2) having a size of 30 mm × 100 mm (short side × long side) and produced from any of the above steel sheets were prepared. The steel sheets were disposed so as to overlap each other to form a test specimen. Welds 9 and 10 having a nugget diameter of 5 mm were disposed at positions spaced 20 mm from the center of the test specimen in the longitudinal direction. Then the center of the test specimen was welded under conditions shown in Table 2-1 or 3-1 to produce a welded joint having a weld 6 at the center. The weld 6 in the obtained welded joint was used to observe the nugget diameter and the presence or absence of cracking.

Moreover, the amount of increase in the nugget diameter was observed.

The nugget diameter, the amount of increase in the nugget diameter, and the presence or absence of cracking were evaluated and judged as follows.

[Evaluation of nugget diameter and amount of increase in nugget diameter]

The nugget diameter (N1) after the first energization step was measured by performing a welding test including only the first energization step under one of the above disturbance conditions and then observing a cross section. In this case, the cross section obtained by cutting the weld was etched and observed under an optical microscope, and the diameter of the nugget between the steel sheets was measured. The measurement value obtained is shown in the "Nugget diameter N1 after first energization step" column in Table 2-2 or 3-2.

The nugget diameter (N2) after the second energization step was measured by the same method as above using one of the welded joints obtained by performing welding tests under the above-described three disturbance conditions. The measurement value obtained is shown in the "Nugget diameter N2 after second energization step" column in Table 2-2 or 3-2.

A value calculated as (N2 - N1) and indicating the amount of increase in the nugget diameter in the second energization step is shown in the "N2 - N1" column in Table 2-2 or 3-2.

[Evaluation of cracking]

The evaluation of cracking (LME cracking) was performed using each of the welded joints obtained by the welding tests performed under the above-described three disturbance conditions. A cross section of the weld was observed under an optical microscope. When a crack of 200 um or more was observed on the surface of the weld, the weld was rated "cracked." When a crack of 200 um or more was not observed, the weld was rated "not cracked." When the rating was "cracked," "Yes" was placed in the "LME cracking" column in Table 2-2 or 3-2. When the rating was "not cracked," "No" was placed in the "LME cracking" column.

[Judgement]

As for the judgement, welds having a nugget diameter (N2) of $4.51\sqrt{t}$ (mm) or more and not cracked under all the three disturbance conditions were rated "o (pass)." The other welds were rated "× (fail)." The evaluation results are shown in Tables 2-2 and 3-2.

[Table 1]

| Sheet set | Upper steel sheet | | | | Lower steel sheet | | | |
|---|---|---|---|---|---|---|---|---|
| | Tensile strength (MPa) | Steel sheet | Equivalent carbon content (Ceq) (%) | Sheet thickness (mm) | Tensile strength (MPa) | Steel sheet | Equivalent carbon content (Ceq) (%) | Sheet thickness (mm) |
| A | 1470 | GA | 0.40 | 1.4 | 1470 | GA | 0.40 | 1.4 |
| B | 780 | GA | 0.30 | 1.4 | 1180 | Coled rolled steel sheet | 0.35 | 1.6 |
| C | 1800 | GA | 0.50 | 1.2 | 780 | GA | 0.22 | 1.8 |

[Table 2-1]

| Test No. | Welding pressure (kN) | Sheet set | First energization step | | | | | | | | Second energization step | | | | Number of repetitions (times) |
| | | | First stage | | Second stage | | Third stage | | n-th stage | If > Is (○: Yes, ×: No) | Cooling step | Energization step | | | |
| | | | Current value I1 (kA) | Energization time (ms) | Current value I2 (kA) | Energization time (ms) | Curren value I3 (kA) | Energization time (ms) | | | Cooling time (ms) | Current value Ip (kA) | Energization time (ms) | |
|---|---|---|---|---|---|---|---|---|---|---|---|---|---|---|
| 1 | 4.0 | A | 3.0 | 40 | 5.0 | 40 | 7.0 | 40 | 3 | ○ | 20 | 9.5 | 40 | 3 |
| 2 | 4.0 | A | 3.0 | 40 | 5.0 | 40 | 7.0 | 40 | 3 | ○ | 40 | 9.5 | 60 | 3 |
| 3 | 4.0 | A | 3.0 | 40 | 5.0 | 40 | 7.0 | 40 | 3 | ○ | 80 | 9.0 | 80 | 2 |
| 4 | 4.0 | A | 3.0 | 40 | 5.0 | 40 | 7.0 | 40 | 3 | ○ | 60 | 9.0 | 100 | 2 |
| 5 | 4.0 | A | 3.0 | 40 | 5.0 | 40 | 7.0 | 40 | 3 | ○ | 80 | 9.0 | 160 | 1 |
| 6 | 4.0 | A | 3.0 | 40 | 5.0 | 40 | 7.0 | 40 | 3 | ○ | 140 | 9.0 | 180 | 1 |
| 7 | 4.0 | A | 3.0 | 40 | 5.0 | 40 | 7.0 | 40 | 3 | ○ | 20 | 9.0 | 40 | 5 |
| 8 | 4.0 | A | 5.0 | 60 | 7.0 | 60 | - | - | 2 | ○ | 20 | 9.5 | 40 | 3 |
| 9 | 4.0 | A | 5.0 | 60 | 7.0 | 60 | - | - | 2 | ○ | 200 | 9.5 | 40 | 3 |
| 10 | 4.0 | A | 8.0 | 120 | - | - | - | - | 1 | × | - | - | - | - |
| 11 | 4.0 | A | 7.0 | 120 | - | - | - | - | 1 | × | - | - | - | - |
| 12 | 4.0 | A | - | - | - | - | - | - | - | - | 20 | 9.0 | 60 | 5 |
| 13 | 4.0 | A | - | - | - | - | - | - | - | - | 20 | 8.0 | 60 | 5 |
| 14 | 4.0 | A | 3.0 | 40 | 2.0 | 40 | 1.0 | 40 | 3 | × | 20 | 9.5 | 40 | 3 |
| 15 | 4.0 | A | 3.0 | 40 | 5.0 | 40 | 7.0 | 40 | 3 | ○ | 20 | 9.5 | 220 | 2 |
| 16 | 2.5 | B | 5.0 | 60 | 7.5 | 100 | - | - | 2 | ○ | 20 | 9.5 | 40 | 3 |
| 17 | 2.5 | B | 3.0 | 60 | 5.0 | 100 | - | - | 2 | ○ | 20 | 9.5 | 60 | 3 |
| 18 | 2.5 | B | 5.0 | 100 | 3.0 | 60 | - | - | 2 | × | 20 | 9.5 | 60 | 3 |
| 19 | 6.0 | C | 4.0 | 40 | 6.0 | 40 | 8.0 | 40 | 3 | ○ | 20 | 10.0 | 40 | 3 |
| 20 | 6.0 | C | 4.0 | 40 | 6.0 | 40 | 8.0 | 40 | 3 | ○ | 20 | 7.0 | 40 | 3 |

(continued)

| Test No. | Welding pressure (kN) | Sheet set | First energization step | | | | | | | | Second energization step | | | Number of repetitions (times) |
| | | | First stage | | Second stage | | Third stage | | n-th stage | If > Is (○: Yes, ×: No) | Cooling step | Energization step | | |
| | | | Current value I1 (kA) | Energization time (ms) | Current value I2 (kA) | Energization time (ms) | Curren value I3 (kA) | Energization time (ms) | | | Cooling time (ms) | Current value Ip (kA) | Energization time (ms) | |
| 21 | 6.0 | C | 4.0 | 140 | 5.5 | 140 | 7.0 | 140 | 3 | ○ | 20 | 10.0 | 40 | 4 |

*1. In multistage energization, the "current value Is at the start of the energization" is the current value in the first stage, and the "current value at the end of the energization" is the current value in the final stage (n-th stage).

EP 4 353 394 A1

[Table 2-2]

| Test No. | No disturbance | | | | With sheet gap | | | | Existing welds | | | | Judgment | Remarks |
|---|---|---|---|---|---|---|---|---|---|---|---|---|---|---|
| | Nugget diameter after first energization step N1 (Vt ratio) | Nugget diameter after second energization step N2 (Vt ratio) | LME cracking | N2-N1 (Vt ratio) | Nugget diameter after first energization step N1 (Vt ratio) | Nugget diameter after second energization step N2 (Vt ratio) | LME cracking | N2-N1 (Vt ratio) | Nugget diameter after first energization step N1 (Vt ratio) | Nugget diameter after second energization step N2 (Vt ratio) | LME cracking | N2-N1 (Vt ratio) | | |
| 1 | 4.3 | 5.1 | No | 0.8 | 4.4 | 5.2 | No | 0.8 | 4.1 | 4.8 | No | 0.7 | ○ | Inventive Example |
| 2 | 4.3 | 5.0 | No | 0.7 | 4.4 | 5.2 | No | 0.8 | 4.1 | 4.7 | No | 0.6 | ○ | Inventive Example |
| 3 | 4.3 | 4.9 | No | 0.6 | 4.4 | 5.2 | No | 0.8 | 4.1 | 4.7 | No | 0.6 | ○ | Inventive Example |
| 4 | 4.3 | 4.9 | No | 0.6 | 4.4 | 5.1 | No | 0.7 | 4.1 | 4.7 | No | 0.6 | ○ | Inventive Example |
| 5 | 4.3 | 4.8 | No | 0.5 | 4.4 | 5.1 | No | 0.7 | 4.1 | 4.6 | No | 0.5 | ○ | Inventive Example |
| 6 | 4.3 | 4.8 | No | 0.5 | 4.4 | 5.1 | No | 0.7 | 4.1 | 4.6 | No | 0.5 | ○ | Inventive Example |
| 7 | 4.3 | 5.0 | No | 0.7 | 4.4 | 5.1 | No | 0.7 | 4.1 | 4.8 | No | 0.7 | ○ | Inventive Example |
| 8 | 4.4 | 5.2 | No | 0.8 | 4.5 | 5.2 | No | 0.7 | 4.0 | 4.9 | No | 0.9 | ○ | Inventive Example |
| 9 | 4.4 | 4.4 ↓ | No | 0.0 | 4.6 | 4.6 | No | 0.0 | 4.0 | 4.0 ↓ | No | 0.0 | × | Comparative Example |
| 10 | 5.0 | 5.0 | No | 0.0 | 5.2 | 5.2 | Yes | 0.0 | 4.8 | 4.8 | No | 0.0 | × | Comparative Example |
| 11 | 4.6 | 4.6 | No | 0.0 | 4.8 | 4.8 | No | 0.0 | 4.2 | 4.2 ↓ | No | 0.0 | × | Comparative Example |
| 12 | - | 4.7 | No | - | - | 4.8 | No | - | - | 4.2 ↓ | No | - | × | Comparative Example |

EP 4 353 394 A1

13

(continued)

| Test No. | No disturbance | | | | With sheet gap | | | | Existing welds | | | | Judgment | Remarks |
|---|---|---|---|---|---|---|---|---|---|---|---|---|---|---|
| | Nugget diameter after first energization step N1 (Vt ratio) | Nugget diameter after second energization step N2 (Vt ratio) | LME cracking | N2-N1 (Vt ratio) | Nugget diameter after first energization step N1 (Vt ratio) | Nugget diameter after second energization step N2 (Vt ratio) | LME cracking | N2-N1 (Vt ratio) | Nugget diameter after first energization step N1 (Vt ratio) | Nugget diameter after second energization step N2 (Vt ratio) | LME cracking | N2-N1 (Vt ratio) | | |
| 13 | - | 4.2 ↓ | No | - | - | 4.6 | No | - | - | 3.9 ↓ | No | - | × | Comparative Example |
| 14 | 2.5 | 4.4 ↓ | No | 1.9 | 2.8 | 4.5 | No | 1.7 | 2.0 | 4.2 ↓ | No | 2.2 | × | Comparative Example |
| 15 | 4.3 | 5.3 | Yes | 1.0 | 4.4 | 5.2 | Yes | 0.8 | 4.1 | 5.3 | Yes | 1.2 | × | Comparative Example |
| 16 | 4.4 | 5.0 | No | 0.6 | 4.5 | 5.2 | No | 0.7 | 4.1 | 4.9 | No | 0.8 | ○ | Inventive Example |
| 17 | 3.2 | 4.9 | No | 1.7 | 3.4 | 5.2 | No | 1.8 | 3.0 | 4.7 | No | 1.7 | ○ | Inventive Example |
| 18 | 3.2 | 5.0 | No | 1.8 | 3.5 | 5.3 | Yes | 1.8 | 3.0 | 4.7 | Yes | 1.7 | × | Comparative Example |
| 19 | 4.3 | 5.0 | No | 0.7 | 4.4 | 5.1 | No | 0.7 | 4.0 | 4.8 | No | 0.8 | ○ | Inventive Example |
| 20 | 4.3 | 4.3 ↓ | No | 0.0 | 4.4 | 4.4 ↓ | No | 0.0 | 4.0 | 4.0 ↓ | No | 0.0 | × | Comparative Example |
| 21 | 4.0 | 4.9 | No | 0.9 | 4.3 | 5.0 | No | 0.7 | 3.7 | 4.8 | No | 1.1 | ○ | Inventive Example |

*∴"↓" indicates that the nugget diameter is less than 4.5√t (mm).

14

[Table 3-1]

| Test No. | Welding pressure (kN) | Sheet set | First energization step | | | If > Is (○: Yes, ×: No) | Cooling step Cooling time (ms) | Second energization step | | |
|---|---|---|---|---|---|---|---|---|---|---|
| | | | Upslope start current Is (kA) | Upslope end current If (kA) | Energization time (ms) | | | Energization step | | Number of repetitions (times) |
| | | | | | | | | Current value Ip (kA) | Energization time (ms) | |
| 1 | 4.0 | A | 3.0 | 7.0 | 120 | ○ | 20 | 9.5 | 40 | 3 |
| 2 | 4.0 | A | 3.0 | 7.0 | 120 | ○ | 60 | 9.0 | 100 | 2 |
| 3 | 4.0 | A | 3.0 | 7.0 | 120 | ○ | 80 | 9.0 | 140 | 1 |
| 4 | 4.0 | A | 3.0 | 7.0 | 120 | ○ | 100 | 9.0 | 160 | 1 |
| 5 | 4.0 | A | 3.0 | 7.0 | 120 | ○ | 60 | 9.0 | 220 | 1 |
| 6 | 4.0 | A | 4.0 | 6.5 | 150 | ○ | 20 | 9.0 | 40 | 5 |
| 7 | 4.0 | A | 5.0 | 3.0 | 120 | × | 20 | 9.0 | 40 | 3 |
| 8 | 4.0 | A | 3.0 | 7.0 | 120 | ○ | 20 | 6.0 | 40 | 3 |
| 9 | 2.5 | B | 3.0 | 7.0 | 120 | ○ | 20 | 9.5 | 40 | 3 |
| 10 | 6.0 | C | 4.0 | 7.5 | 460 | ○ | 20 | 10.0 | 40 | 3 |

[Table 3-2]

| Test No. | No disturbance | | | | With sheet gap | | | | Existing welds | | | | Judgment | Remarks |
|---|---|---|---|---|---|---|---|---|---|---|---|---|---|---|
| | Nugget diameter after first energization step N1 (√t ratio) | Nugget diameter after second energization step N2 (√t ratio) | LME cracking | N2-N1 (√t ratio) | Nugget diameter after first energization step N1 (√t ratio) | Nugget diameter after second energization step N2 (√t ratio) | LME cracking | N2-N1 (√t ratio) | Nugget diameter after first energization step N1 (√t ratio) | Nugget diameter after second energization step N2 (√t ratio) | LME cracking | N2-N1 (√t ratio) | | |
| 1 | 4.3 | 5.1 | No | 0.8 | 4.4 | 5.2 | No | 0.8 | 4.1 | 4.8 | No | 0.7 | ○ | Inventive Example |
| 2 | 4.3 | 5.1 | No | 0.8 | 4.4 | 5.2 | No | 0.8 | 4.1 | 4.9 | No | 0.8 | ○ | Inventive Example |
| 3 | 4.3 | 5.0 | No | 0.7 | 4.4 | 5.2 | No | 0.8 | 4.1 | 4.8 | No | 0.7 | ○ | Inventive Example |
| 4 | 4.3 | 5.0 | No | 0.7 | 4.4 | 5.2 | No | 0.8 | 4.1 | 4.8 | No | 0.7 | ○ | Inventive Example |
| 5 | 4.3 | 5.0 | No | 0.7 | 4.4 | 5.2 | Yes | 0.8 | 4.1 | 4.8 | No | 0.7 | × | Comparative Example |
| 6 | 4.2 | 5.0 | No | 0.8 | 4.3 | 5.1 | No | 0.8 | 3.9 | 4.8 | No | 0.9 | ○ | Inventive Example |
| 7 | 2.8 | 4.2 ↓ | No | 1.4 | 2.9 | 4.3 ↓ | No | 1.4 | 2.6 | 4.0 ↓ | No | 1.4 | × | Comparative Example |
| 8 | 4.3 | 4.3 ↓ | No | 0.0 | 4.4 | 4.4 ↓ | No | 0.0 | 4.0 | 4.0 ↓ | No | 0.0 | × | Comparative Example |
| 9 | 4.3 | 5.0 | No | 0.7 | 4.4 | 5.2 | No | 0.8 | 4.0 | 4.9 | No | 0.9 | ○ | Inventive Example |
| 10 | 4.2 | 5.0 | No | 0.8 | 4.3 | 5.1 | No | 0.8 | 4.0 | 4.9 | No | 0.9 | ○ | Inventive Example |

*::"↓" indicated that the nugget diameter is less than 4.5Vt (mm).

As can be seen from Tables 2-2 and 3-2, in the Inventive Examples, good welded joints having no cracking and having the target nugget diameter were obtained irrespective of the disturbance condition. However, in Comparative Examples, good welded joints were not obtained. Reference Signs List

| | |
|---|---|
| 1 | upper steel sheet |
| 2 | lower steel sheet |
| 3 | upper electrode |
| 4 | lower electrode |
| 5 | nugget |
| 6 | weld |
| 7, 8 | spacer |
| 9, 10 | existing weld |

**Claims**

1. A resistance spot welding method comprising: disposing two or more steel sheets including at least one high strength zinc-based coated steel sheet so as to overlap each other to thereby form a sheet set; holding the sheet set between a pair of welding electrodes; and energizing the steel sheets under application of pressure to join the steel sheets together,

   wherein the high strength zinc-based coated steel sheet has an equivalent carbon content represented by formula (1) of 0.20% or more and a tensile strength of 780 MPa or more,
   wherein the energizing includes a first energization step and a second energization step,
   wherein, in the first energization step, a current value at a start of energization is denoted as Is (kA), a current value at an end of the energization is denoted as If (kA), the thickness of a thinnest steel sheet among the overlapping steel sheets is denoted as t (mm), and
   the energization is performed such that the current value If (kA) at the end of the energization satisfies formula (2) to thereby form a weld having a nugget diameter of from 3.0√t (mm) to 4.5√t (mm) inclusive, and
   wherein, in the second energization step, a cooling step of holding a non-energization state for 10 ms or longer and shorter than 160 ms and an energization step of energizing the steel sheets at a current value Ip (kA) equal to or larger than the current value If (kA) at the end of the energization for 20 ms or longer and shorter than 200 ms are repeated to increase a size of a nugget,

   $$Ceq = C + Si / 30 + Mn / 20 + 2P + 4S, \quad (1)$$

   $$If > Is, \quad (2)$$

   where element symbols in formula (1) represent the contents (% by mass) of respective elements, and the content of an element is 0 when the element is not contained.

2. The resistance spot welding method according to claim 1, wherein the first energization step is multistage energization including first to n-th stages (n is an integer of 2 or more), and

   wherein current values in the respective stages in the multistage energization are denoted as I1 to In (kA), the current value I1 (kA) in the first stage is the same as the current value Is (kA) at the start of the energization, the current value In in the n-th stage is the same as the current value If (kA) at the end of the energization, and the current values I1 to In (kA) in the respective stages satisfy formula (3),

   $$I1 < I2 < I3 < \cdots < In. \quad (3)$$

3. The resistance spot welding method according to claim 1, wherein the energization in the first energization step is upslope energization in which the current value is continuously increased from the current value Is at the start of the energization to the current value If at the end of the energization.

4. The resistance spot welding method according to any one of claims 1 to 3, wherein the number of repetitions of the cooling step and the energization step in the second energization step is 2 or more.

5. The resistance spot welding method according to any one of claims 1 to 4, wherein the diameter of the formed nugget at completion of the first energization step is denoted as N1 (mm), the diameter of the formed nugget at completion of the first energization step and the second energization step is denoted as N2 (mm), and
the amount of increase in the diameter of the nugget in the second energization step is $0.1\sqrt{t}$ (mm) or more, the amount of increase being represented by (N2 - N1).

FIG. 1

FIG. 2

# FIG. 3

# FIG. 4

FIG. 5

## INTERNATIONAL SEARCH REPORT

| | International application No. |
|---|---|
| | **PCT/JP2022/028107** |

**A.    CLASSIFICATION OF SUBJECT MATTER**

*B23K 11/24*(2006.01)i; *B23K 11/11*(2006.01)i; *B23K 11/16*(2006.01)i
FI:    B23K11/24 315; B23K11/16 311; B23K11/11 540

According to International Patent Classification (IPC) or to both national classification and IPC

**B.    FIELDS SEARCHED**

Minimum documentation searched (classification system followed by classification symbols)

B23K11/24; B23K11/11; B23K11/16

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | WO 2019/124464 A1 (NIPPON STEEL CORP) 27 June 2019 (2019-06-27)<br>    paragraphs [0044]-[0092], fig. 5 | 1-5 |
| Y | WO 2020/059804 A1 (NIPPON STEEL CORP) 26 March 2020 (2020-03-26)<br>    paragraphs [0140]-[0141] | 1-5 |
| A | WO 2015/049998 A1 (JFE STEEL CORP) 09 April 2015 (2015-04-09)<br>    entire text, all drawings | 1-5 |
| A | JP 2021-79416 A (TOYOTA MOTOR CORP) 27 May 2021 (2021-05-27)<br>    entire text, all drawings | 1-5 |
| A | WO 2019/124467 A1 (NIPPON STEEL CORP) 27 June 2019 (2019-06-27)<br>    entire text, all drawings | 1-5 |

☐ Further documents are listed in the continuation of Box C.    ☑ See patent family annex.

| | |
|---|---|
| *    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **03 October 2022** | **11 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/028107**

| Patent document cited in search report | | | Publication date (day/month/year) | Patent family member(s) | | | Publication date (day/month/year) |
|---|---|---|---|---|---|---|---|
| WO | 2019/124464 | A1 | 27 June 2019 | (Family: none) | | | |
| WO | 2020/059804 | A1 | 26 March 2020 | US paragraphs [0204]-[0205] CN | 2021/0354248 112739471 | A1 A | |
| WO | 2015/049998 | A1 | 09 April 2015 | US entire text, all drawings CN | 2016/0236294 105612020 | A1 A | |
| JP | 2021-79416 | A | 27 May 2021 | (Family: none) | | | |
| WO | 2019/124467 | A1 | 27 June 2019 | US entire text, all drawings CN | 2020/0361021 111511497 | A1 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003103377 A
- JP 2003236676 A
- JP 2017047476 A
- JP 2012187639 A